(19) Europäisches Patentamt
European Patent Office
Office européen des brevets

(11) **EP 2 883 665 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(51) Int Cl.:
***B25J 9/16*** *(2006.01)*

(21) Anmeldenummer: **14004416.5**

(22) Anmeldetag: **08.12.2010**

(54) **Verfahren und Vorrichtung zum Steuern eines Manipulators**

Method and device for controlling a manipulator

Procédé et dispositif destinés à la commande d'un manipulateur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2009 DE 102009058607**

(43) Veröffentlichungstag der Anmeldung:
**17.06.2015 Patentblatt 2015/25**

(62) Dokumentnummer(n) der früheren Anmeldung(en) nach Art. 76 EPÜ:
**10790736.2 / 2 512 755**

(73) Patentinhaber: **KUKA Deutschland GmbH 86165 Augsburg (DE)**

(72) Erfinder:
• **Klumpp, Simon 73765 Neuhausen (DE)**
• **Schreiber, Günter, Dr. 86316 Friedberg-Derching (DE)**

(74) Vertreter: **Schlotter, Alexander Carolus Paul Wallinger Ricker Schlotter Tostmann Patent- und Rechtsanwälte Partnerschaft mbB Zweibrückenstrasse 5-7 80331 München (DE)**

(56) Entgegenhaltungen:
**EP-A1- 0 901 054      EP-A2- 1 950 010 EP-A2- 2 045 049**

**Beschreibung**

Die vorliegende Erfindung betrifft ein Verfahren und eine Vorrichtung zum Steuern eines Manipulators, insbesondere eines Roboters, sowie ein Haltewerkzeug für einen erfindungsgemäß verwendeten Manipulator.

Industrieroboter sollen unter anderem zum Fügen von Bauteilen eingesetzt werden. Dabei erschweren insbesondere Positionstoleranzen von angelieferten Werkstücken, die mit vom Roboter gehaltenen Werkstücken gefügt werden sollen, die Automatisierung.

Neben konstruktiven Nachgiebigkeiten, etwa einem flexiblen Roboter oder einer flexiblen Endeffektoranbindung, zum Beispiel durch ein sogenanntes Remote Center of Compliance ("RCC"), sind in der Forschung diverse theoretische Lösungsansätze solcher sogenannter Bolzen-Loch-Probleme vorgeschlagen worden, beispielsweise die Erfassung von Kontaktkräften durch zusätzliche Kraftsensoren und die Ermittlung der korrekten Fügetrajektorie auf Basis dieser Kontaktkräfte. Diese Ansätze wurden jedoch bislang aufgrund verschiedener Probleme kaum in der Praxis umgesetzt.

Aus der EP 0 901 054 A1 ist ein Verfahren zum Steuern eines Roboters bekannt, der ein Werkstück hält und auf einer programmierten Bahn in ein Spannfutter bewegt. Bei Erfassung eines Kontakts zwischen einer distalen Stirnseite und einer Werkstückbefestigungsfläche des Spannfutters wird ein Verstärkungsfaktor einer Servoregelung reduziert, so dass eine Stellung des Werkstücks mittels einer Reaktionskraft von der Werkstückbefestigungsfläche und Reaktionskräften von Spannmitteln korrigiert wird. In ähnlicher Weise kann in der EP 2 045 049 A2 ein Endeffektor eines Roboterarms beim Aufgreifen eines Wafers nachgiebig ausweichen und so eine Aufnahmeposition korrigieren. Die EP 1 950 010 A2 werden Kräfte, die ein Roboter beim manuellen Anfahren von Raumpunkten ausübt, abgespeichert.

Aufgabe der vorliegenden Erfindung ist es, die Steuerung eines Manipulators zu verbessern.

Diese Aufgabe wird durch ein Verfahren mit den Merkmalen des Anspruchs 1, 6 bzw. 8 gelöst. Ansprüche 10, 11 stellen eine Vorrichtung bzw. ein Computerprogrammprodukt, insbesondere ein Speichermedium oder einen Datenträger, zur Durchführung eines erfindungsgemäßen Verfahrens unter Schutz. Die Unteransprüche betreffen vorteilhafte Weiterbildungen.

Ein Verfahren bzw. eine Vorrichtung nach der vorliegenden Erfindung ist insbesondere für einen ein- oder mehr-, beispielsweise sechsachsigen oder redundanten Roboter wie zum Beispiel einen Industrieroboter oder einen Leichtbauroboter, etwa den Leichtbauroboter "LBR" der Anmelderin, vorgesehen. Dabei wird unter einem Steuern auch ein Regeln, i.e. die Vorgabe von Steuergrößen auf Basis vorgegebener Führungs- und erfasster Ist-Größen, verstanden.

Nach der vorliegenden Erfindung wird eine Kontaktkraft auf Basis tatsächlicher Antriebskräfte und Antriebskräften eines dynamischen Modells des Manipulators erfasst.

Zur kompakteren Darstellung wird vorliegend auch ein Drehmoment, i.e. ein antiparalleles Kräftepaar, verallgemeinernd als Kraft bezeichnet, so dass beispielsweise unter dem Erfassen einer Kontaktkraft die Erfassung von Kraft- und/oder Drehmomentkomponenten in einer oder mehreren Richtungen, insbesondere kartesischen Raumrichtungen oder Gelenkachsen, verstanden und auch ein Antriebsdrehmoment beispielsweise eines Elektromotors als Antriebskraft bezeichnet wird.

Tatsächliche Antriebskräfte können beispielsweise direkt, etwa mittels Kraftsensoren an einer Achse oder einem Antrieb des Manipulators, und/oder indirekt, zum Beispiel auf Basis einer Leistungsaufnahme oder -abgabe eines Antriebs erfasst werden.

Ein dynamisches Modell beschreibt allgemein den Zusammenhang zwischen kinematischen Größen, insbesondere Gelenkkoordinaten $q$, -geschwindigkeiten $dq/dt$ und -beschleunigungen $d^2q/dt^2$, und Kräften, insbesondere Antriebs-, Gewichts- und Reibungskräften, etwa in der Form

$$M\, d^2q/dt^2 + h(q,\, dq/dt) = \tau_{\text{Modell}}$$

mit der Massenmatrix $M$ und den generalisierten Kräften $h$. Sind die kinematischen Größen sowie Gewichts- und Reibungskräften bekannt, resultieren Unterschiede zwischen den Antriebskräften $\tau_{\text{Modell}}$ des Modells und den tatsächlichen Antriebskräften $\tau$ neben Modell- und Messfehlern insbesondere aus im Modell nicht vorgesehenen Kontaktkräften, die somit aufgrund der Differenz zwischen tatsächlich gemessenen und Modell-Antriebskräften erfasst werden können:

$$F_{\text{Kontakt}} = F(\tau_{\text{Modell}} - \tau)$$

Diese Erfassung von Kontaktkräften zwischen dem Manipulator und einem Werkstück auf Basis tatsächlicher Antriebskräfte und Antriebskräften eines dynamischen Modells spart zusätzliche Kraftsensoren und ermöglicht in vorteilhafter Weise eine nachfolgend erläuterte Vermessung, Fügeüberwachung und/oder Umschaltung in eine nachgiebige Regelung.

Gemäß einer Ausführung der vorliegenden Erfindung werden eine oder mehrere Posen, insbesondere zum Vermessen oder Fügen von Werkstücken, mit dem steif geregelten Manipulator angefahren. Unter einer steifen Regelung wird insbesondere eine Positionsregelung verstanden, beispielsweise eine Proportional-, Differential- und/oder Integralregelung, etwa einer kartesischen Position eines Referenzpunktes wie zum Beispiel des TCPs, oder in Gelenkkoordinaten des Manipulators.

Dabei werden kontinuierlich oder zu diskreten Zeitpunkten eine oder mehrere Kontaktkräfte erfasst, die bei einem Kontakt mit einem angefahrenen Werkstück auf den Manipulator wirken.

Übersteigt eine erfasste Kontaktkraft einen vorgegebenen Wert, der insbesondere auch Null betragen kann, gegebenenfalls unter Berücksichtigung entsprechender Toleranzen, wird erfindungsgemäß in eine nachgiebige Regelung umgeschaltet. Vorzugsweise erfolgt eine solche Umschaltung innerhalb von höchstens 3 Millisekunden nach Eintritt eines Kontaktes, bevorzugt innerhalb von höchstens 1,5 Millisekunden.

Eine nachgiebige Regelung bzw. ein Umschalten in eine solche kann beispielsweise dadurch realisiert werden, dass Regelkoeffizienten einer P- oder PD-Regelung reduziert werden und/oder ein Integralanteil einer PID-Regelung entfällt, so dass der Manipulator auch bei größeren Regelabweichungen bzw. Schleppfehlern zwischen Soll- und Ist-Pose keine hohen Antriebskräfte aufbringt. Zusätzlich oder alternativ kann auch eine Antriebskraft auf einen, vorzugsweise niedrigen, Maximalwert begrenzt werden, so dass wiederum auch bei größeren Schleppfehlern keine hohen Antriebskräfte erzeugt werden. In einer bevorzugten Ausführung ist eine nachgiebige Regelung als sogenannte Impedanzregelung, insbesondere kraftbasierte Impedanzregelung ausgebildet. Allgemein wird als nachgiebige Regelung im Gegensatz zu einer steifen Regelung vorliegend insbesondere jede Regelung bezeichnet, bei der Antriebskräfte des Manipulators derart erzeugt werden, dass bei einem Kontakt mit einem Werkstück weder dieses noch der Manipulator beschädigt werden, auch wenn eine vorgegebene Soll-Pose ein weiteres Eindringen des Manipulators in das Werkstück erfordert.

In einer bevorzugten Ausführung wird dann ein Werkstück unter der nachgiebigen Regelung gefügt und/oder seine Position auf Basis erfasster Kontaktkräfte in einem mehrstufigen Verfahren vermessen. Auf diese Weise können, insbesondere in Verbindung mit einem Leichtbauroboter mit seinen geringeren Trägheiten, Taktzeiten vorteilhaft reduziert werden, da nunmehr eine Vermessungs- oder Fügegrundpose unter der steifen Regelung rasch und präzise angefahren werden kann, ohne dass die Gefahr besteht, beim Vermessens bzw. Fügen das Werkstück oder den Manipulator zu beschädigen, da bei Kontakt unverzüglich in die nachgiebige Regelung umgeschaltet wird.

Gemäß einer Ausführung der vorliegenden Erfindung wird ein Werkstück unter nachgiebiger Regelung gefügt und dabei ein Fügezustand des Werkstückes auf Basis einer erfassten Kontaktkraft überwacht. Durch Überwachen einer Kontaktkraft kann beispielsweise, etwa aufgrund eines signifikanten Anstiegs oder Abfalls, ein Einschnappen eines unter elastischer oder plastischer Deformation gefügten Werkstückes und damit ein korrekter Fügevorgang erkannt werden. So nimmt beispielsweise beim Fügen unter elastischer Deformation zunächst eine Kontaktkraft, insbesondere entgegen der Fügerichtung, zu. Entspannt sich das Werkstück, zum Beispiel nach Überwinden einer Wulst, fällt diese Kraft signifkant ab. Ebenso kann beispielsweise aus einem Drehmoment, welches eine gefügte Schraube als Kontaktkraft auf den Manipulator ausübt, die gemäß dem ersten Aspekt erfasst wird, der Verspannungszustand der Schraube überprüft und festgestellt werden, ob die Schraube zu fest angezogen wurde, ihr Schraubenkopf abgedreht wurde oder die Schraube aufgrund eines Setzens im Gewinde zu locker sitzt.

Zusätzlich oder alternativ kann ein Fügezustand des Werkstückes auf Basis einer unter der nachgiebigen Regelung erreichten Endpose des Manipulators überwacht werden. Durch eine nachgiebige Regelung kann erreicht werden, dass der Manipulator unabhängig vom Erreichen einer Soll-Fügeendpose das Werkstück nicht mehr weiter in Fügerichtung bewegt. Wird die unter der nachgiebigen Regelung erreichten Endpose mit der Soll-Fügeendpose verglichen, die beispielsweise durch Teachen eines Roboters bestimmt werden kann, kann bestimmt werden, ob der Fügevorgang korrekt ausgeführt worden ist.

Weiter zusätzlich oder alternativ kann ein Fügezustand des Werkstückes auch auf Basis einer unter der nachgiebigen Regelung erfolgenden zeitlichen Änderung der Pose des Manipulators überwacht werden, insbesondere auf Basis einer Geschwindigkeit. Unterschreitet beispielsweise eine Geschwindigkeit des TCPs bzw. des manipulatorgeführten Werkstückes in Fügerichtung einen Grenzwert, kann erfasst werden, dass das Werkstück korrekt gefügt ist.

Ist dies nicht der Fall, da beispielsweise das zu fügende Werkstück durch eine Störkontur behindert wird, kann eine Fügestrategie, insbesondere eine Fügeposition, verändert werden, indem beispielsweise versucht wird, einen Bolzen in einer zur ursprünglichen Fügegrundposition versetzten neuen Ausgangsposition zu fügen.

Gemäß einer bevorzugten Ausführung werden bei einem Fügen eines Werkstückes unter einer nachgiebigen Regelung sowohl eine oder mehrere Soll-Kräfte als auch eine oder mehrere Soll-Bewegungen vorgegeben. Wird die nachgiebige Regelung beispielsweise durch eine kraftbasierte Impedanzregelung realisiert, indem etwa Antriebskräfte $\tau$ gemäß

$$\tau = J^{\mathrm{T}}[c(x_{\mathrm{soll}} - x)]$$

durch eine mittels der transponierten Jacobimatrix $J$ in den Raum der Gelenkkoordinaten, etwa der Drehwinkel eines Knickarmroboters, projizierte Federkraft einer virtuellen Feder mit der Federkonstanten c zwischen einer kartesischen Soll- und Ist-Position $x_{\mathrm{soll}}$ bzw. $x$ etwa des TCPs bestimmt werden, kann der Soll-Bewegung gemäß

$$\tau = J^{\mathrm{T}}[c(x_{\mathrm{soll}} - x) + F]$$

eine im kartesischen Raum definierte Kraft hinzugefügt werden. Dies kann bevorzugt wahlweise, beispielsweise in Abhängigkeit des bereits erfolgten Fügevorgangs oder der Fügestrategie für das jeweilige Werkstück erfolgen. Die Soll-Kraft kann beispielsweise konstant, rampenförmig, wechselnd oder schwellend, insbesondere sinusförmig vorgegeben werden, um beispielsweise Stick-Slip-Phänomene, Grate oder kleinere elastische Toleranzen beim Fügen zu überwinden.

Insbesondere, um Werkstücke miteinander zu fügen, ist es erforderlich, eine Position, i.e. eine Lage und/oder Orientierung, eines Werkstückes, beispielsweise eines Grundkörpers, relativ zu dem Manipulator zu kennen, der ein damit zu fügendes Werkstück hält, beispielsweise einen Bolzen, eine Klammer oder dergleichen. Daher wird gemäß der vorliegenden Erfindung eine Position eines Werkstückes mittels des Manipulators in einem mehrstufigen Verfahren vermessen.

Dabei werden Positionen von wenigstens zwei nicht fluchtenden Konturen, insbesondere Kanten, des Werkstückes bestimmt, indem Posen des Manipulators und dabei auf ihn wirkende Kontaktkräfte erfasst werden. Steigt eine Kontaktkraft beim Einnehmen einer Pose signifikant an, da ein Taster des Manipulators eine Kontur des Werkstückes kontaktiert, kann aus der zugehörigen Pose des Manipulators die Kontaktposition ermittelt werden.

Ist auf diese Weise die Position des Werkstückes relativ zum Manipulator grob bekannt, können nun Referenzpunkte des Werkstückes, die beispielsweise durch Aussparungen, insbesondere Bohrungen, definiert sein können, prozesssicher angefahren werden. Bei Kontakt eines Tasters mit einem Referenzpunkt, beispielsweise Hineingleiten eines Tasters in eine Aussparung, kann aufgrund eines Anstiegs einer entsprechenden Kontaktkraft, die einer Weiterbewegung des Tasters entgegenwirkt, die Position dieses Referenzpunktes bestimmt werden. Auf Basis dieser Referenzpunkte kann ein Werkstückkoordinatensystem bestimmt werden, welches im Gegensatz zu den zur Groborientierung angefahrenen Konturen eine präzise Bestimmung beispielsweise von Fügepositionen und dergleichen ermöglicht.

Vorzugsweise wird ein Referenzpunkt mit einem Taster pertubierend angefahren, i.e. der Manipulator bewegt den Taster in der unmittelbaren Nähe der vorab geschätzten Position des Referenzpunktes längs einer festgelegten Suchstrecke, vorzugsweise in einer Ebene, die im Wesentlichen tangential zur Werkstückkontur im Referenzpunkt orientiert ist, und sucht so gewissermaßen den Bereich um die vorab geschätzten Position des Referenzpunktes ab, bis er aufgrund der Kontaktkraft, etwa infolge eines Hineingleitens des Tasters in einer Bohrung, an einer Weiterbewegung gehindert wird. Dabei zeigt sich der Vorteil, wenn gemäß dem ersten Aspekt die vorab geschätzte Position des Referenzpunktes unter einer nachgiebigen Regelung angefahren wird.

Insbesondere, um ein Hineingleiten eines Tasters in eine einen Referenzpunkt definierende Aussparung sicherzustellen, kann der Manipulator bei dessen Anfahren eine Normalkraft senkrecht zu der oben erläuterten Ebene, die im Wesentlichen tangential zur Werkstückkontur im Referenzpunkt orientiert ist, auf das Werkstück ausüben. In einer bevorzugten Ausführung der vorliegenden Erfindung sind ein Taster und eine Aussparung zur Definition eines Referenzpunktes so ausgebildet, dass sich der Taster bei einem Hineingleiten in die Aussparung selbst zentriert. Beispielsweise kann der Taster eine kegelförmige Spitze und die Aussparung einen kreisförmigen Umfang aufweisen.

Das Antasten von Konturen zur Bestimmung der groben Position des Werkstückes, um Referenzpunkte prozesssicher antasten zu können, und dieses Antasten der Referenzpunkte kann nacheinander derart erfolgen, dass zunächst alle vorgegebenen Konturen angetastet werden, bevor anschließend die Referenzpunkte, deren ungefähre Position damit bekannt ist, angefahren werden. Gleichermaßen kann dies auch abwechselnd derart erfolgen, dass zunächst jeweils Konturen, vorzugsweise in der Nähe von Referenzpunkten, angetastet werden, anschließend Referenzpunkte, deren ungefähre Lage in Bezug auf diese Konturen bekannt ist, bevor anschließend wiederum andere Konturen angetastet werden, um die ungefähre Position weiterer Referenzpunkte zu bestimmen und diese anschließend prozesssicher antasten zu können.

Ein dritter Aspekt der vorliegenden Erfindung betrifft das Fügen eines Werkstückes mittels eines Manipulators. Dies kann vorteilhafterweise mit dem oben erläuterten ersten und/oder zweiten Aspekt kombiniert sein.

Gemäß dem dritten Aspekt hält ein Manipulator ein zu fügendes Werkstück zunächst in wenigstens zwei, vorzugsweise nicht kollinearen, insbesondere im Wesentlichen senkrecht zueinander orientierten, Kraftkontakten, wenn er es in einer Fügegrundposition ansetzt. Als Kraftkontakt wird dabei ein Kontakt zwischen Werkstück und Manipulator, insbesondere einem Haltewerkzeug, bezeichnet, in dem der Manipulator eine Haltekraft auf das Werkstück ausübt, als Orientierung entsprechend die Richtung der jeweiligen Haltekraft.

Beispielsweise kann ein erster Kraftkontakt kraftschlüssig durch einen Elektromagneten realisiert werden, der bei Aktuierung das Werkstück anzieht. Ein zweiter Kraftkontakt kann zum Beispiel formschlüssig durch einen Absatz realisiert werden, an dem sich das Werkstück abstützt.

Nach dem Ansetzen in einer Fügegrundposition bewegt der Manipulator das Werkstück in Fügerichtung in eine Fügeendposition. Erfindungsgemäß wird dabei einer der Kraftkontakte, beispielsweise der erste, durch einen Elektromagneten realisierte Kraftkontakt geöffnet, sobald dessen Stütz- bzw. Haltefunktion durch ein Werkstück, mit dem das vom Manipulator gehaltene Werkstück gefügt wird, übernommen wird.

Dies ermöglicht eine Umorientierung des das Werkstück haltenden Manipulatorwerkzeugs, so dass ein Konflikt mit Konturen eines Werkstückes, mit dem das vom Manipulator gehaltene Werkstück gefügt wird, vermieden werden kann.

Insbesondere, um ein Vermessen und ein anschließendes Fügen von Werkstücken gemäß wenigstens einem der vorgenannten Aspekte kürzere Taktzeiten zu ermöglichen, weist ein erfindungsgemäßes Haltewerkzeug für einen Manipulator einen Haltebereich zum, insbesondere kraft- und/oder formschlüssigen, Halten eines Werkstückes, und zusätzlich einen Taster zum Antasten eines Werkstückes auf. Der Haltebereich kann beispielsweise durch einen oder mehrere Elektromagnete und/oder Absätze die oben erläuterten ersten bzw. zweiten Kraftkontakte darstellen, der Taster vorzugsweise ein kegelförmiges Ende zur Selbstzentrierung in einer Aussparung unter einer nachgiebigen Regelung aufweisen. Bevorzugt erstreckt sich der Taster im Wesentlichen rechtwinkelig oder entgegengesetzt zu dem Anlage- bzw. Haltebereich des Haltewerkzeugs, um Konflikte zwischen einem Werkstück und dem Haltebereich beim Vermessen bzw. dem Taster beim Fügen zu vermeiden. Ein Taster im Sinne der vorliegenden Erfindung kann somit insbesondere ein fest mit einem Haltewerkzeug des Manipulators verbundener oder integral mit diesem ausgebildeter Bolzen, Stift oder dergleichen sein, der vorzugsweise rotationssymmetrisch ist und/oder eine Spitze aufweist.

Weitere Vorteile und Merkmale ergeben sich aus den Unteransprüchen und den Ausführungsbeispielen. Hierzu zeigt, teilweise schematisiert:

Fig. 1: eine Draufsicht auf ein Werkstück beim Vermessen gemäß einem Verfahren nach einer Ausführung der vorliegenden Erfindung;

Fig. 2: einen Schnitt längs der Linie II-II in Fig. 1;

Fig. 3A: eine Seitansicht von links oben in Fig. 1 beim Fügen eines Werkstückes gemäß einem Verfahren nach einer Ausführung der vorliegenden Erfindung;

Fig. 3B: einen Schnitt längs der Linie IIIB-IIIB in Fig. 1, 3A mit in Fügegrundposition angesetztem Werkstück;

Fig. 3C: eine Ansicht gemäß Fig. 3B mit Werkstück in Fügeendposition;

Fig. 4A - 4D: eine Seitansicht beim Fügen eines anderen Werkstückes gemäß einem Verfahren nach einer Ausführung der vorliegenden Erfindung;

Fig. 5: den Ablauf der in Fig. 1, 2 gezeigten Vermessung;

Fig. 6: den Ablauf der in Fig. 3A gezeigten Veränderung einer Fügeposition; und

Fig. 7: den Ablauf eines in Fig. 4A - 4D gezeigten Fügens.

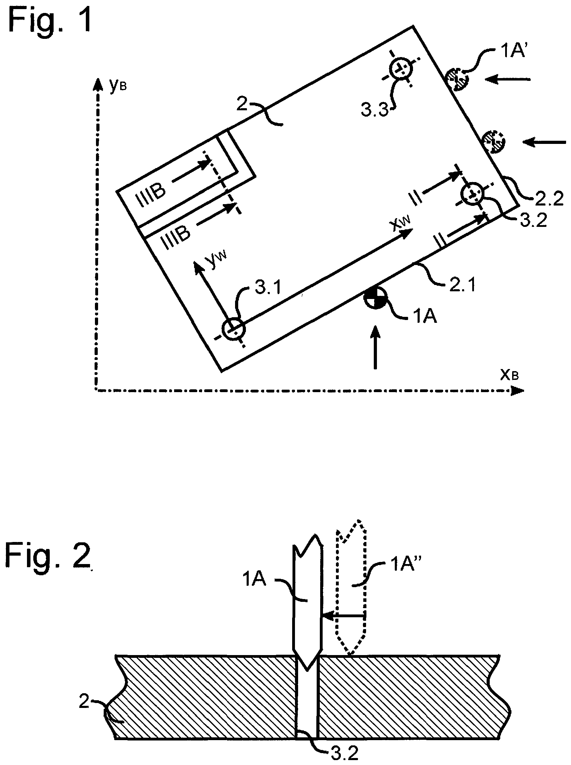

Anhand der Fig. 1, 2 und 5 wird ein mehrstufiges Vermessen einer Position eines Werkstückes 2 auf Basis erfasster Kontaktkräfte gemäß einem Verfahren nach einer Ausführung der vorliegenden Erfindung erläutert.

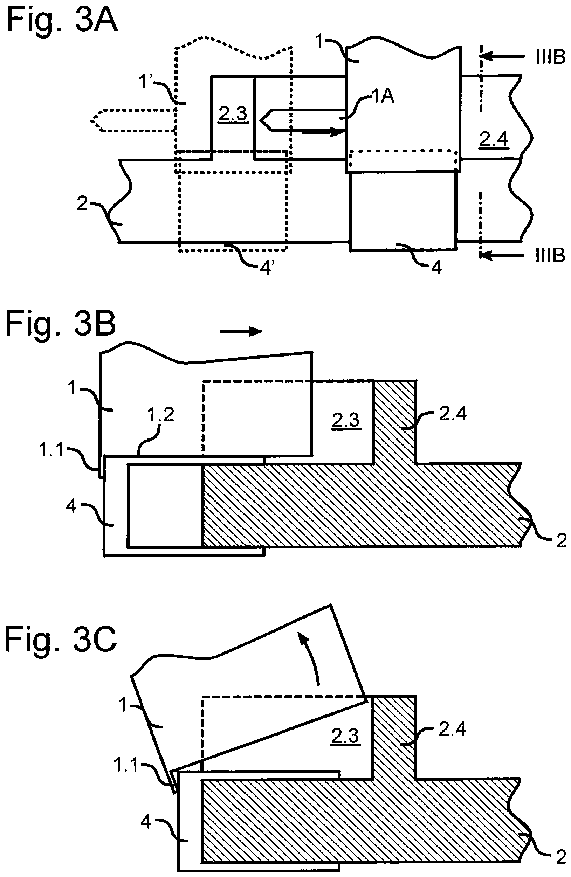

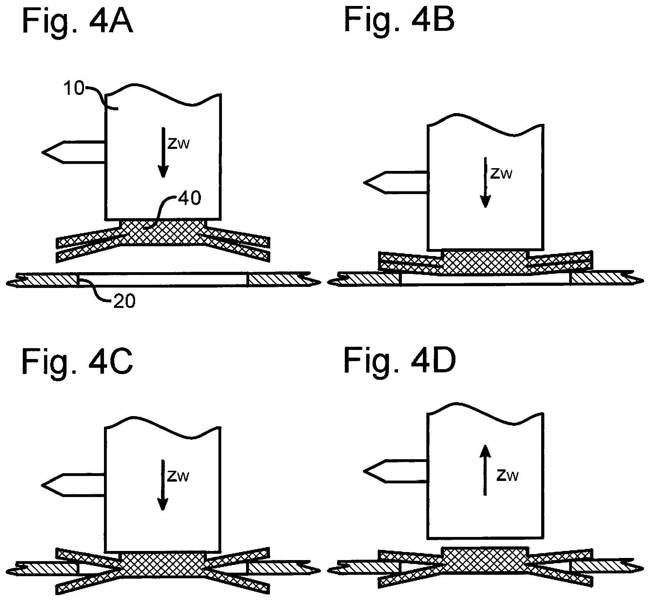

Dabei ist das Werkstück 2, beispielsweise ein Armaturenbrett, nach seiner Anlieferung zunächst innerhalb gewisser Toleranzen beliebig im Arbeitsbereich eines Leichtbauroboters positioniert, von dem in den Figuren stets nur ein Teil eines Haltewerkzeuges 1 gezeigt ist, in den Fig. 1, 2 nur ein rechtwinkelig zu einem Haltebereich 1.1, 1.2, auf den nachfolgend mit Bezug auf Fig. 3, 4 eingegangen wird, angeordneter zylindrischer Taster 1A mit kegelförmiger Spitze (vgl. Fig. 3A). Im Arbeitsbereich ist ein Basis-Koordinatensystem B des Roboters definiert, dessen x- und y-Achsen in Fig. 1 angedeutet sind. Durch die nachfolgend jeweils näher erläuterte Verwendung eines erfindungsgemäßen Haltewerkzeugs 1 mit einem Haltebereich 1.1, 1.2 (vgl. Fig. 3B) und einem Taster 1A (vgl. Fig. 3A) kann ein Werkzeugwechsel zwischen Vermessen und Fügen vermieden und so die Taktzeit reduziert werden.

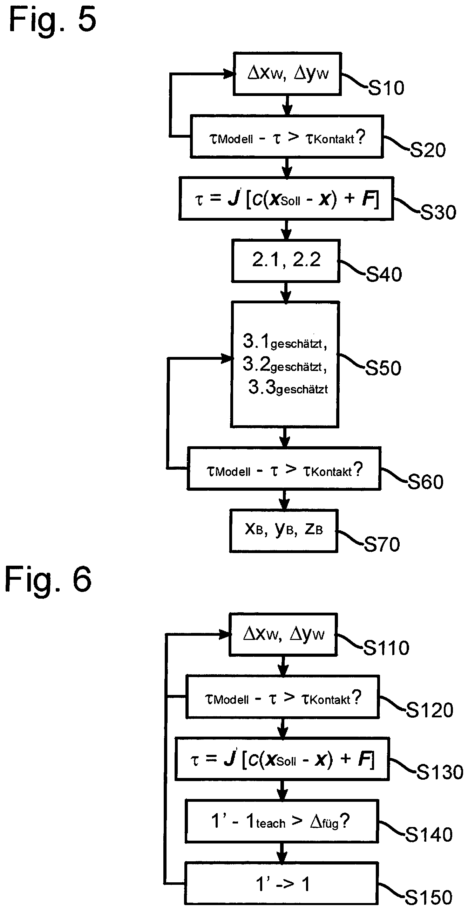

In einer ersten Stufe einer mehrstufigen Vermessung verfährt der Roboter steif PIDgeregelt seinen Taster 1A in x- bzw. y-Richtung des Koordinatensystems B, bis dieser nacheinander die Kanten 2.1, 2.2 des Werkstücks 2 an den in Fig. 1 angedeuteten Stellen kontaktiert (vgl. Fig. 5, Schritt S10). Dabei vergleicht eine Steuerungsvorrichtung (nicht dargestellt) die am Roboter gemessenen Antriebsdrehmomente $\tau$ mit theoretischen Antriebsdrehmomenten $\tau_{Modell}$, die gemäß einem dynamischen kontaktfreien Modell zur Erzeugung der erfassten Bewegung des Roboters theoretisch erforderlich wären (Fig. 1: "S20"). Übersteigt die Differenz zwischen diesen Antriebsdrehmomenten, insbesondere betragsmäßig, einen vorgegebenen Grenzwert $\tau_{Kontakt}$, wird hieraus erkannt, dass der Taster 1A eine Kante 2.1 bzw. 2.2 des Werkstücks 2 kontaktiert hat. Daraufhin wird unverzüglich innerhalb 1 Millisekunde in eine nachgiebige kraftbasierte Impedanzregelung umgeschaltet (Fig. 1: "S30"), in der der Taster 1A mit einer virtuellen Feder in Richtung einer Soll-Position $x_{soll}$ "gezogen" wird.

Durch das Antasten der zwei nicht miteinander fluchtenden Kanten 2.1, 2.2 kann die Position des Werkstücks 2 im Koordinatensystem B des Roboters bereits grob bestimmt werden (Fig. 1: "S40"). Dabei stellt das Umschalten in die nachgiebige Regelung sicher, dass der Roboter die Konturen zunächst steif geregelt schnell anfahren kann, ohne bei Kontakt Werkstück oder Roboter zu beschädigen.

In einer zweiten Stufe werden drei nicht kollineare Referenzbohrungen 3.1 - 3.3 im Werkstück 2 mit dem Taster angefahren. Hierzu bewegt der Roboter den Taster 1A in Positionen $3.1_{geschätzt}$ bis $3.3_{geschätzt}$ (Fig. 1:

"S50"), die aufgrund der aus der ersten Stufe grob bekannten Position des Werkstücks 2 geschätzt werden, wobei der Taster 1A pertubierten, beispielsweise mäanderförmig oder in parallelen Bahnen, um die geschätzten Positionen bewegt wird (vgl. Fig. 2). Dabei wird die Tasterspitze mit einer Normalkraft senkrecht zur Oberflächenebene des Werkstückes auf dieses aufgedrückt, während insbesondere in dieser Ebene (links - rechts in Fig. 2) der Roboter nachgiebig geregelt wird.

Sobald der Taster 1A dabei aus einer neben einer Referenzbohrung liegenden Position, die in Fig. 2 gestrichelt angedeutet und mit 1A'' bezeichnet ist, in die durch die Referenzbohrung 3 definierte Referenzpunktposition gelangt, gleitet er unter der aufgeprägten Normalkraft in diese hinein und zentriert sich aufgrund seiner kegelförmigen Spitze und der in der Oberflächenebene nachgiebigen Regelung in dieser Bohrung, wie dies ausgezogen in Fig. 2 dargestellt ist.

Einer Weiterbewegung des Tasters 1A durch den nachgiebig geregelten Roboter, der weiterhin die Suchstrecke abzufahren versucht, wirkt nun eine signifikant größere Kontaktkraft auf den in der Bohrung 3.2 sitzenden Taster 1A entgegen, die in einem Schritt S60 (Fig. 5) erfasst wird. Auf diese Weise können die Positionen der Referenzbohrungen 3.1 - 3.3 schnell, präzise, schonend und prozesssicher bestimmt werden. Aus diesen kann dann insbesondere die Position eines werkstückfesten Koordinatensystems W relativ zum Roboterkoordinatensystem B bestimmt werden.

Nun wird beispielsweise eine Klammer 4 (vgl. Fig. 3) auf eine in Fig. 1 linke oberer Kante des Werkstücks 2 gefügt, wobei die mehrstufige Vermessung unter Umschaltung in eine nachgiebige Regelung auch entfallen kann. Dieser Fügevorgang wird anhand der Fig. 3, 6 erläutert.

In Fig. 3A ist strichliert eine erste Fügegrundposition eingezeichnet, an der der Roboter die Klammer 4 zunächst ansetzt und in Fügerichtung auf das Werkstück 2 aufzuschieben versucht (Index ' in Fig. 3A; Schritt S110 in Fig. 6). Dabei kollidiert die Klammer 4 jedoch mit einem Flansch 2.3 des Werkstücks 2 (vgl. auch Fig. 1). Wie zuvor beschrieben, wird bei Kontakt in eine nachgiebige Regelung umgeschaltet (Fig. 6: "S120", "S130"), in der einer Soll-Bewegung $x_{Soll}$ eine vorgegebene Soll-Kraft $F$, insbesondere eine konstante Kraft $F_{xy}$ in Fügerichtung und eine Kraft $F_z$ mit sinusförmigem Verlauf senkrecht zu Fügerichtung und -ebene, überlagert wird, um ein Aufschieben auf die Kante zu erleichtern.

Aufgrund der nachgiebigen Regelung erfolgt jedoch trotz der Kollision mit dem Flansch 2.3 keine Beschädigung von Werkstück oder Roboter. Vielmehr wird, sobald das Werkzeug 1 des Roboters mit daran gehaltener Klammer 4 sich aufgrund des Widerstandes nicht mehr bewegt, die dabei erreichte Endpose des Roboters (in Fig. 3A strichliert angedeutet) mit einer geteachten Endlage bei korrekt aufgeschobener Klammer 4 verglichen (Fig. 6: S140). Im vorliegenden Fall erkennt die Steuerungsvorrichtung aufgrund des signifkanten Unterschiedes, dass die Klammer 4 nicht korrekt aufgeschoben wurde. Daher wird die Fügeposition verändert (Fig. 6: S150), indem der Roboter die Klammer 4 seitlich versetzt erneut am Werkstück 2 ansetzt, wie in Fig. 3A - 3C ausgezogen angedeutet. Dieser Vorgang wird solange wiederholt, bis der Roboter die Klammer 4 kollisionsfrei fügen kann oder eine vorgegebene Anzahl von Fehlversuchen erreicht ist.

Anhand der Fig. 3B, 3C wird ein erfolgreicher Fügevorgang erläutert. Dabei setzt der Roboter das Werkstück, gegebenenfalls nach vorstehend mit Bezug auf Fig. 3A beschriebenen Fehlversuchen, in einer Fügegrundposition an und schiebt es leicht auf das Werkstück 2 auf (Fig. 3B). Hierbei hält er die Klammer 4 einerseits in einem ersten Kraftkontakt in vertikaler Richtung mittels eines aktuierten Elektromagneten 1.2, und stützt sie zugleich in einem zweiten Kraftkontakt gegen eine dem Aufschieben entgegenwirkende zweiten Kontaktkraft in horizontaler Richtung formschlüssig in einem Absatz 1.1 des Werkzeugs 1 ab.

Um beim weiteren Fügen eine Kollision des Werkzeugs 1 mit dem Flansch 2.4 des Werkstücks 2 zu vermeiden, löst die Steuervorrichtung während des Aufschiebens den ersten Kraftkontakt, indem der Elektromagnet 1.2 nicht mehr bestromt wird, was eine Umorientierung des Werkzeugs 1 (Fig. 3C) relativ zu der teilweise aufgeschobenen Klammer 4 ermöglicht. Auf diese Weise kann der Roboter mit dem Werkzeugabsatz 1.1 die Klammer 4 vollständig auf das Werkstück 2 aufschieben.

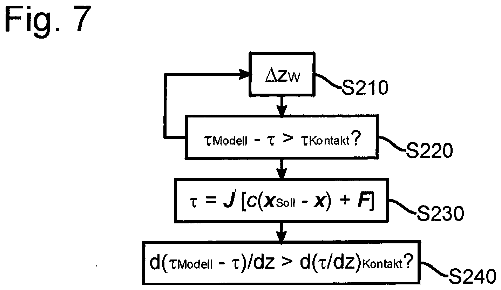

Anhand der Fig. 4, 7 wird das Fügen eines anderen Bauteils, nämlich eines elastischen Stopfens 40, in eine Bohrung 20 erläutert. Man erkennt, dass der Roboter den Stopfen 40 zunächst in vertikaler Richtung auf die Bohrung 20 zu bewegt (Schritt S210 in Fig. 7). Übersteigt eine anhand der Differenz zwischen gemessenen und Modell-Antriebsmomenten erfasste Kontaktkraft einen vorgegebenen Grenzwert, erfasst die Steuervorrichtung den Kontakt mit dem Werkstück (Fig. 7: "S220") und schaltet in eine nachgiebige Regelung um (Fig. 7: "S230"). Unter dieser wird der Stopfen weiter eingefügt und die Kontaktkraft über dem Fügevorschub z erfasst.

Man erkennt in der Bildfolge Fig. 4B → Fig. 4C, dass sich der Stopfen 40 dabei elastisch verformt. Sobald sein unterer Flansch die Bohrung 20 vollständig durchquert hat und elastisch in seine Ausgangslage zurückspringt, reduziert sich die Kontaktkraft, die dem Fügen entgegenwirkt.

Diesen Kraftabfall erfasst die Steuervorrichtung in einem Schritt S240 und kann auf dieser Basis auch bei nachgiebiger Regelung überprüfen, ob der Stopfen 40 ordnungsgemäß in die Bohrung 20 eingesetzt wurde. Alternativ oder zusätzlich kann auch hier wieder die bei Stillstand des Roboters erreichte Endpose mit einer zuvor geteachten Pose verglichen werden, um zu überprüfen, ob der Stopfen 40 vollständig in die Bohrung 20 eingeführt worden ist.

Zusätzlich oder alternativ kann hier ein Geschwindigkeitskriterium verwendet werden. Dies ist insbesondere dann sinnvoll, wenn die Endposition in Fügerichtung nicht genau bekannt ist, falls beispielsweise die Position des Werkstücks 20 variiert, ohne dass es vor dem Fügen jeweils vermessen wird. Sinkt zum Beispiel die Geschwindigkeit des TCPs bzw. Werkstücks 40 für einen vorgegebene Zeitspanne unter einen vorgegebenen Grenzwert, so kann die Steuervorrichtung erfassen, dass der Stopfen 40 nicht mehr weiter in die Bohrung gedrückt werden kann. Dann wird die so erreichte Endpose erfasst und mit einer bei Kontakt der Werkstücke 20, 40, der beispielsweise über den dabei erfasten Kraftanstieg erfasst werden kann, gespeicherten Pose verglichen. Liegt die Differenz beider Posen in einem vorgebenen Toleranzbereich, wird der Fügevorgang als erfolgreich erfasst.

In einer nicht dargestellten Ausführung fügt der Leichtbauroboter durch die Vorgabe eines Soll-Drehmonentes und/oder eines Soll-Vorschubes eine Schraube in ein Gewinde. Auch dabei wird eine Kontaktkraft, beispielsweise ein Drehmoment in Schraubrichtung, erfasst und der Fügezustand auf Basis dieser Kontaktkraft überwacht. Hat der Roboter seine geteachte Fügeendpose erreicht, und liegt dabei ein zu hohes Drehmoment an, ist die Schraube zu fest angezogen. Liegt hingegen ein zu niedriges Drehmoment an, ist die Schraube nicht fest genug angezogen, weil sich beispielsweise eine Mutter gesetzt hat oder ein Schraubenkopf abgedreht wurde.

Zusätzlich oder alternativ kann die eingedrehte Schraube nach dem Anziehen mit einem definierten Moment um einen vorgegebenen Winkelwert weitergedreht werden, beispielsweise um 90°. Nach dieser Drehung muss das erfasste Moment bei korrekt abgezogener Schraube in einem vorgegebenen Bereich liegen.

Bezugszeichenliste

| | |
|---|---|
| 1; 10 | Haltewerkzeug |
| 1A | Taster |
| 1.1 | Absatz (Haltebereich, formschlüssiger Kraftkontakt) |
| 1.2 | Elektromagnet (Haltebereich, kraftschlüssiger Kraftkontakt) |
| 2 | Werkstück |
| 2.1, 2.2 | Kante (Kontur) |
| 2.3, 2.4 | Flansch |
| 3.1 - 3.3 | Bohrung (Referenzpunkt) |
| 4 | Klammer |
| 20 | Werkstück |
| 40 | Stopfen |

**Patentansprüche**

**1.** Verfahren zum Steuern eines Manipulators, insbesondere eines Roboters, mit dem Schritt:

Erfassen einer Kontaktkraft zwischen dem Manipulator und einem Werkstück (2; 20) auf Basis tatsächlicher Antriebskräfte ($\tau$) und Antriebskräften ($\tau_{\text{Modell}}$) eines dynamischen Modells ($\boldsymbol{M}$ d$^2\boldsymbol{q}$/d$t^2$ + $\boldsymbol{h}(\boldsymbol{q}$, d$\boldsymbol{q}$/d$t$) = $\tau_{\text{Modell}}$) des Manipulators; **gekennzeichnet durch** ein mehrstufiges Vermessen einer Position eines Werkstückes (4) mittels des Manipulators, mit den folgenden Stufen:

a) Bestimmen von Positionen von wenigstens zwei nicht fluchtenden Konturen, insbesondere Kanten (2.1, 2.2), des Werkstückes (2) durch Erfassen von Posen des Manipulators und dabei auf ihn wirkenden Kontaktkräften (S40);
b) Anfahren von, insbesondere durch Aussparungen (3.1, 3.2, 3.3) definierten, Referenzpunkten des Werkstückes (2) auf Basis von derart erfassten Konturen (2.1, 2.2) des Werkstückes (S50); und
c) Bestimmen von Positionen dieser Referenzpunkte durch Erfassen von Kontaktkräften, die bei der Bewegung im Rahmen des Anfahrens auf den Manipulator wirken (S70).

**2.** Verfahren nach Anspruch 1, **gekennzeichnet durch** wenigstens einen der Schritte:

Fügen eines Werkstückes (4; 40) unter nachgiebiger Regelung (S130; S230), wobei ein Fügezustand des Werkstückes auf Basis einer erfassten Kontaktkraft, einer unter der nachgiebigen Regelung erreichten Endpose des Manipulators und/oder Geschwindigkeit oder höheren zeitlichen Ableitung des Manipulators überwacht wird; und/oder
steif geregeltes Anfahren einer Pose (S10; S110; S210); sowie Umschalten in eine nachgiebige Regelung auf Basis einer erfassten Kontaktkraft (S30; S130; S230).

**3.** Verfahren nach Anspruch 2, **dadurch gekennzeichnet, dass** innerhalb von höchstens 3 Millisekunden nach Eintritt eines Kontaktes (S20; S120; S220) in eine nachgiebige Regelung umgeschaltet wird (S30; S130; S230).

**4.** Verfahren nach einem der vorhergehenden Ansprüche 2 bis 3, **dadurch gekennzeichnet, dass** zum Vermessen und zum Fügen dasselbe Haltewerkzeug (1; 10) verwendet wird.

**5.** Verfahren nach einem der vorhergehenden Ansprüche 2 bis 4, **dadurch gekennzeichnet, dass** in einer nachgiebigen Regelung zum Fügen des Werkstückes, insbesondere wahlweise, sowohl wenigstens eine Soll-Kraft als auch wenigstens eine Soll-Bewegung vorgegeben werden (S130; S230).

6. Verfahren nach einem der vorhergehenden Ansprüche 2 bis 5, **dadurch gekennzeichnet, dass** eine Fügestrategie, insbesondere eine Fügegrundposition, auf Basis einer erfassten Kontaktkraft, einer unter der nachgiebigen Regelung erreichten Endpose des Manipulators und/oder Geschwindigkeit oder höheren zeitlichen Ableitung des Manipulators erforderlichenfalls verändert wird (S150; Fig. 3A → Fig. 3B).

7. Verfahren zum Steuern eines Manipulators nach einem der vorhergehenden Ansprüche zum Fügen eines Werkstückes (4) mittels des Manipulators, mit den Schritten:

Halten des Werkstückes mit dem Manipulator in wenigstens zwei Kraftkontakten (1.1, 1.2);
Ansetzen des Werkstückes in einer Fügegrundposition (Fig. 3A);
Bewegen des Werkstückes in eine Fügeendposition (Fig. 3B) unter Lösen wenigstens eines Kraftkontaktes (1.2).

8. Verfahren nach Anspruch 7, **dadurch gekennzeichnet, dass** ein, insbesondere bei der Bewegung des Werkstückes in die Fügeendposition gelöster, Kraftkontakt (1.2) kraftschlüssig und/oder ein, insbesondere bei der Bewegung des Werkstückes in die Fügeendposition aufrechterhaltener, Kraftkontakt (1.1) formschlüssig ist.

9. Verfahren nach einem der vorhergehenden Ansprüche, **dadurch gekennzeichnet, dass** der Manipulator beim, insbesondere pertubierten, Anfahren eines Referenzpunktes mit einem Taster (1A) eine Normalkraft auf das Werkstück (2) ausübt und/oder in einer Ebene senkrecht hierzu nachgiebig geregelt wird.

10. Steuervorrichtung für einen Manipulator, insbesondere einen Roboter, **dadurch gekennzeichnet, dass** sie zur Durchführung eines Verfahrens nach einem der vorhergehenden Ansprüche eingerichtet ist.

11. Computerprogrammprodukt mit Programmcode, der auf einem maschinenlesbaren Träger gespeichert ist und ein Computerprogramm umfasst, das ein Verfahren nach einem der Ansprüche 1 bis 9 ausführt, wenn es in einer Steuervorrichtung nach Anspruch 10 abläuft.

**Claims**

1. A method of controlling a manipulator, in particular a robot, comprising the step of:

Detecting a contact force between the manipulator and a workpiece (2; 20) on the basis of actual driving forces ($\tau$) and driving forces ($\tau_{\text{Modell}}$) of a dynamic model ($\boldsymbol{M}\mathrm{d}^2\boldsymbol{q}/\mathrm{d}t^2 + \boldsymbol{h}(\boldsymbol{q}, \mathrm{d}\boldsymbol{q}/\mathrm{d}t) = \tau_{\text{Modell}}$) of the manipulator;
**characterized by** measuring, in multiple stages, a position of a workpiece (4) by means of the manipulator, with the following stages:

a) determining positions of at least two non-aligned contours, in particular edges (2.1, 2.2) of the workpiece (2), by detecting poses of the manipulator and, associated therewith, contact forces acting on said manipulator (S40);
b) approaching reference points of the workpiece (2), in particular reference points defined by recesses (3.1, 3.2, 3.3), on the basis of contours (2.1, 2.2) of the workpiece detected in this manner (S50); and
c) determining positions of these reference points by detecting contact forces that act on the manipulator during the movement associated with the approaching (S70).

2. The method according to claim 1, **characterized by** at least one of the steps of:

joining a workpiece (4; 40) under compliant regulation (S130; S230), wherein a joining state of the workpiece is monitored on the basis of a detected contact force, an end pose of the manipulator attained under the compliant regulation and/or the speed or higher time derivative of the manipulator; and/or
a rigidly regulated approaching of a pose (S10; S110; S210), as well as switching to a compliant regulation on the basis of a detected contact force (S30; S130; S230).

3. The method according to claim 2, **characterized in that** switching to a compliant regulation (S30; S130; S230) takes place within at most 3 milliseconds after establishing of a contact (S20; S120; S220).

4. The method according to any one of the preceding claims 2 to 3, **characterized in that** the same holding tool (1; 10) is used for the measuring and the joining.

5. The method according to any one of the preceding claims 2 to 4, **characterized in that**, in a compliant regulation for joining the workpiece, at least one target force as well as at least one target movement are prescribed, in particular in a selective manner (S130; S230).

6. The method according to any one of the preceding claims 2 to 5, **characterized in that**, if required, a joining strategy, in particular a joining base position, is changed on the basis of a detected contact force, an end pose of the manipulator attained under the compliant regulation and/or the speed or higher time derivative of the manipulator (S150; Fig. 3A → Fig. 3B).

7. The method of controlling a manipulator according to any one of the preceding claims for joining a workpiece (4) by means of the manipulator, comprising the steps of:

holding the workpiece by means of the manipulator in at least two force contacts (1.1, 1.2); placing the workpiece in a joining base position (Fig. 3A); moving the workpiece into a joining end position (Fig. 3B) whilst releasing at least one force contact (1.2).

8. The method according to claim 7, **characterized in that** a force contact (1.2), in particular a force contact (1.2) which is released with the movement of the workpiece into the joining end position, is of a force-fit nature and/or a force contact (1.1), in particular a force contact (1.1) which is maintained during the movement of the workpiece into the joining end position, is of a form-fit nature.

9. The method according to any one of the preceding claims, **characterized in that** the manipulator exerts a normal force onto the workpiece (2) by means of a feeler (1A) during approaching of a reference point, in particular in a perturbative manner, and/or is compliantly regulated in a plane perpendicular thereto.

10. A control device for a manipulator, in particular a robot, **characterized in that** it is arranged to carry out a method according to any one of the preceding claims.

11. A computer program product with program code, which is stored on a machine-readable medium and which comprises a computer program, which carries out a method according to any one of the claims 1 to 9 when it is executed on a control device according to claim 10.

## Revendications

1. Procédé de commande d'un manipulateur, en particulier d'un robot, avec l'étape de :

détection d'une force de contact entre le manipulateur et une pièce à usiner (2 ; 20) sur la base de forces d'entraînement réelles ($\tau$) et de forces d'entraînement ($\tau_{\text{modèle}}$) d'un modèle dynamique (M $d^2q/dt^2$ + h(q, dq/dt) = $\tau_{\text{modèle}}$) du manipulateur ;
**caractérisé par** une mesurage en plusieurs étapes d'une position d'une pièce à usiner (4) au moyen du manipulateur, avec les étapes suivantes :

a) détermination de positions d'au moins deux contours non alignés, en particulier d'arêtes (2.1 ; 2.2), de la pièce à usiner (2) par détection de positions du manipulateur et de forces de contact agissant ce faisant sur celui-ci (S40) ;
b) approche de points de référence, définis en particulier par des évidements (3.1, 3.2, 3.3), de la pièce à usiner (2) sur la base de contours (2.1, 2.2) ainsi détectés de la pièce à usiner (S50) ; et
c) détermination de positions de ces points de référence par détection de forces de contact, qui agissent sur le manipulateur lors du déplacement dans le cadre de l'approche (S70).

2. Procédé selon la revendication 1, **caractérisé par** au moins une des étapes :

assemblage d'une pièce à usiner (4 ; 40) par réglage souple (S130 ; S230), dans lequel un état d'assemblage de la pièce à usiner est surveillé sur la base d'une force de contact détectée, d'une position finale du manipulateur atteinte par réglage souple et/ou vitesse ou dérivée de temps supérieure du manipulateur ; et/ou approche d'une position (S10 ; S110 ; S210) ; ainsi que commutation dans un réglage souple sur la base d'une force de contact détectée (S30 ; S130 ; S230).

3. Procédé selon la revendication 2, **caractérisé en ce qu'**une commutation a lieu en l'espace de maximum 3 millisecondes après l'entrée d'un contact (S20 ; S120 ; S220) dans un réglage souple (S30 ; S130 ; S230).

4. Procédé selon l'une quelconque des revendications précédentes 2 à 3, **caractérisé en ce que** le même outil de retenue (1 ; 10) est utilisé pour le mesurage et l'assemblage.

5. Procédé selon l'une quelconque des revendications précédentes 2 à 4, **caractérisé en ce que** dans un réglage souple pour l'assemblage de la pièce à usiner, en particulier au choix, aussi bien au moins une force de consigne qu'au moins un mouvement de consigne sont prédéfinis (S130 ; S230).

6. Procédé selon l'une quelconque des revendications précédentes 2 à 5, **caractérisé en ce qu'**une stratégie d'assemblage, en particulier une position de base d'assemblage est modifiée si nécessaire sur la base d'une force de contact détectée, d'une position finale du manipulateur atteinte par le réglage souple et/ou vitesse ou dérivée de temps supérieure du manipulateur (S150 ; fig. 3A -> fig. 3B).

7. Procédé de commande d'un manipulateur selon l'une quelconque des revendications précédentes pour l'assemblage d'une pièce à usiner (4) au moyen du manipulateur, avec les étapes de :

    maintien de la pièce à usiner avec le manipulateur dans au moins deux contacts de force (1.1 ; 1.2) ;
    application de la pièce à usiner dans une position de base d'assemblage (fig. 3A) ;
    déplacement de la pièce à usiner dans une position finale d'assemblage (fig. 3B) par libération d'au moins un contact de force (1.2).

8. Procédé selon la revendication 7, **caractérisé en ce qu'**un contact de force (1.2), libéré en particulier lors du déplacement de la pièce à usiner dans la position finale d'assemblage est à force et/ou un contact de force (1.1), maintenu en particulier lors du déplacement de la pièce à usiner dans la position finale d'assemblage est à complémentarité de forme.

9. Procédé selon l'une quelconque des revendications précédentes, **caractérisé en ce que** le manipulateur lors de l'approche, en particulier perturbée, d'un point de référence avec un bouton poussoir (1A) exerce une force normale sur la pièce à usiner (2) et/ou est réglé souple dans un plan perpendiculaire à celui-ci.

10. Dispositif de commande pour un manipulateur, en particulier un robot, **caractérisé en ce qu'**il est aménagé pour la réalisation d'un procédé selon l'une quelconque des revendications précédentes.

11. Produit de programme informatique avec code de programme, qui est enregistré sur un support lisible par machine et comprend un programme informatique, qui réalise un procédé selon l'une quelconque des revendications 1 à 9, lorsqu'il est exécuté dans un dispositif de commande selon la revendication 10.

# Fig. 1

# Fig. 2

**Fig. 3A**

**Fig. 3B**

**Fig. 3C**

## Fig. 4A

## Fig. 4B

## Fig. 4C

## Fig. 4D

# Fig. 5

$$\Delta x_W, \Delta y_W \quad \text{S10}$$

$$\tau_{Modell} - \tau > \tau_{Kontakt}? \quad \text{S20}$$

$$\tau = J'[C(x_{Soll} - x) + F] \quad \text{S30}$$

$$2.1, 2.2 \quad \text{S40}$$

$$3.1_{geschätzt},$$
$$3.2_{geschätzt},$$
$$3.3_{geschätzt} \quad \text{S50}$$

$$\tau_{Modell} - \tau > \tau_{Kontakt}? \quad \text{S60}$$

$$x_B, y_B, z_B \quad \text{S70}$$

# Fig. 6

$$\Delta x_W, \Delta y_W \quad \text{S110}$$

$$\tau_{Modell} - \tau > \tau_{Kontakt}? \quad \text{S120}$$

$$\tau = J'[C(x_{Soll} - x) + F] \quad \text{S130}$$

$$1' - 1_{teach} > \Delta_{füg}? \quad \text{S140}$$

$$1' \rightarrow 1 \quad \text{S150}$$

# Fig. 7

$\Delta z_W$ — S210

$\tau_{Modell} - \tau > \tau_{Kontakt}?$ — S220

$\tau = J\,[C(x_{Soll} - x) + F]$ — S230

$d(\tau_{Modell} - \tau)/dz > d(\tau/dz)_{Kontakt}?$ — S240

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0901054 A1
- EP 2045049 A2

- EP 1950010 A2